# EUROPÄISCHE PATENTANMELDUNG

(11) **EP 4 825 465 A1**
(43) Veröffentlichungstag der Anmeldung: **21.10.2026**
(21) Anmeldenummer: 26158412.2
(22) Anmeldetag: 13.02.2026
(51) Int. Cl.: B01D 29/66, B01D 35/147

(54) **HEIZUNGSFILTERANORDNUNG**

(30) Priorität: 14.04.2025 DE 202025102044 U
(71) Anmelder: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(57) **Zusammenfassung**

Eine rückspülbare Heizungsfilteranordnung (10; 110) zum Herausfiltern von Partikeln aus Heizungswasser in einem Heizkreislauf enthaltend: ein Armaturengehäuse (14; 112, 114) mit einem Einlass (16; 116) und einem Auslass (18; 118) zum Einbau in eine Rohrleitung des Heizkreislaufs; ein strömungsmäßig zwischen Einlass und Auslass angeordnetes Filterelement (36; 136); einen Bypasskanal (66; 166), welcher an dem Filterelement vorbei vom Einlass zum Auslass geführt ist; und eine einlassseitige Absperrung (24; 124), welche von einer Betriebsstellung, in welcher der Bypasskanal blockiert ist und die Strömung zum Filterelement durchgelassen wird, in eine Absperrstellung schaltbar ist, bei welcher die Strömung zum Filterelement blockiert ist und zum Bypasskanal geleitet wird; ist dadurch gekennzeichnet, dass auslassseitig ein Kugelhahn (26; 126) mit einem Durchgangskanal (60; 160) und einem Verbindungskanal (159) vorgesehen ist, welcher von einer Betriebsstellung, bei welcher die Strömung vom Filterelement durch den Durchgangskanal zum Auslass durchgelassen wird, in eine Wartungsstellung schaltbar ist, bei welcher die Strömung vom Bypasskanal durch den Verbindungskanal zum Auslass geleitet wird.

## Beschreibung

### Technisches Gebiet

Die Erfindung betrifft eine rückspülbare Heizungsfilteranordnung zum Herausfiltern von Partikeln aus Heizungswasser in einem Heizkreislauf enthaltend:
(a) ein Armaturengehäuse mit einem Einlass und einem Auslass zum Einbau in eine Rohrleitung des Heizkreislaufs;
(b) ein strömungsmäßig zwischen Einlass und Auslass angeordnetes Filterelement;
(c) einen Bypasskanal, welcher an dem Filterelement vorbei vom Einlass zum Auslass geführt ist; und
(d) eine einlassseitige Absperrung, welche von einer Betriebsstellung, in welcher der Bypasskanal blockiert ist und die Strömung zum Filterelement durchgelassen wird, in eine Absperrstellung schaltbar ist, bei welcher die Strömung zum Filterelement blockiert ist und zum Bypasskanal geleitet wird.

In einem Heizungssystem wird Wasser in einem geschlossenen Heizkreislauf umgepumpt. Das Wasser wird erwärmt und zu den Heizkörpern geleitet. Dort gibt es seine Wärme ab. Anschließend wird es wieder zurück zur Heizung geleitet. Moderne Heizkörper und Wärmetauscher sollen möglichst kompakt ausgeführt werden. Die Anlagen sind dann zwar leistungsfähig, aber auch empfindlicher gegenüber Schmutz, Kalk und Gas, insbesondere Luft.

### Stand der Technik

Es ist bekannt, Wasser für geschlossene Heizkreisläufe zu reinigen, bevor sie in den Heizkreislauf eingespeist werden. Hierzu wird das Wasser separat entkalkt und gefiltert.

Aus der EP 0 742 038 A2 ist eine Anordnung bekannt, bei der suspendierte Korrosionsprodukte und sonstige partikelförmige Verunreinigungen aus Heizwasserkreisläufen mit einer Bürste entfernt werden. Zum Reinigen des Filters müssen mehrere Griffe und Hähne betätigt werden. Dadurch ist die Anordnung vergleichsweise komplex. Nachteilig bei der bekannten Anordnung ist es auch, dass diese blockieren kann.

DE 202009000084 U1 der Anmelderin offenbart einen rückspülbaren Heizungsfilter mit einer Stahlbürste als Filterelement. Die Verwendung der Bürste kann zur Verstopfung des Filters führen.

WO 96/04062 A1 und DE 7621391U offenbaren Filter mit einem Bypass. Das Wasser fließt durch den Bypass, wenn das Filtermedium ausgetauscht wird. Eine Rückspülung ist nicht vorgesehen.

EP 2 407 225 A1 und EP 2 808 070 B1 offenbaren rückspülbare Heizungsfilter, bei denen der Heizkreislauf zum Rückspülen unterbrochen werden muss.

DE 20 2017 104 526U1 offenbart einen Heizungsfilter, bei dem ein Bypasskanal vorgesehen ist, welcher an dem Filterelement vorbei vom Einlass zum Auslass geführt ist. Die Anordnung kann zum Rückspülen des Filterelements von einer Betriebsstellung in eine Bypassstellung bewegt werden. Bei einer solchen Anordnung braucht der Betrieb des Heizkreislaufs zum Rückspülen nicht unterbrochen werden. Ein Entnehmen und/oder Austauschen des Filterelements ist weder in der Betriebs- noch in der Rückspülstellung möglich. Absperrungen sind an diesem Heizungsfilter nicht vorgesehen.

DE 33 24 704 A1 offenbart einen Rückspülfilter mit einem Bypass. Zwei Absperrventile mit drehbarer Ventilspindel dienen zur Steuerung der Strömung. Die Bedienung der Absperrventile ist mühsam und die Ventilstellung von außen nicht erkennbar.

### Offenbarung der Erfindung

Es ist Aufgabe der Erfindung, eine einfach und kostengünstig aufgebaute, rückspülbare Heizungsfilteranordnung der eingangs genannten Art zu schaffen, welche die Entnahme des Filterelements ohne Unterbrechung des Heizkreislaufs erlaubt.

Erfindungsgemäß wird die Aufgabe dadurch gelöst, dass auslassseitig ein Kugelhahn mit einem Durchgangskanal und einem Verbindungskanal vorgesehen ist, welcher von einer Betriebsstellung, bei welcher die Strömung vom Filterelement durch den Durchgangskanal zum Auslass durchgelassen wird, in eine Wartungsstellung schaltbar ist, bei welcher die Strömung vom Bypasskanal durch den Verbindungskanal zum Auslass geleitet wird.

In der Betriebsstellung ist der Bypass durch die einlassseitige Absperrung abgesperrt. In der Absperrstellung ist die Verbindung vom Einlass zum Filterelement durch die einlassseitige Absperrung abgesperrt. In der Wartungsstellung ist die Verbindung vom Filterelement zum Auslass durch die auslassseitige Absperrung abgesperrt.

Bei einer solchen Filteranordnung kann die Strömung eine Wartungsstellung einnehmen, in welcher die Strömung vollständig durch den Bypasskanal geleitet wird. Die Absperrungen sperren die Verbindung vom Einlass zum Filterelement und vom Filterelement zum Auslass. Kein Wasser fließt durch das Filterelement. Dies ermöglicht es, das Filterelement zu entnehmen und auszutauschen, zu warten und/oder zu reinigen, während der Heizkreislauf nicht unterbrochen wird.

Bei der Erfindung ist vorgesehen, dass die auslassseitige Absperrung von einem Kugelhahn gebildet ist, dessen Kugel eine Durchgangsbohrung aufweist, durch welche die Strömung in der Betriebsstellung vom Filterelement zum Auslass leitbar ist und die einen Verbindungskanal in Form einer Bohrung oder einer Ausnehmung aufweist, welche in der Wartungsstellung eine Verbindung zwischen dem Bypasskanal und dem Auslass herstellt. Die Ausnehmung kann von einem Bereich der Oberfläche der Kugel gebildet sein, in welchem die Form von der Kugelform abweicht und geringere Radien aufweist, als der übrige Teil der Kugel. Die Strömung kann vom Bypasskanal durch die Ausnehmung in der Kugeloberfläche zum Auslass fließen. Eine Ausnehmung an einer Kugel ist kostengünstig herstellbar. Es braucht kein zusätzlicher Kanal oder Durchgang im Armaturengehäuse vorgesehen werden, über den die Verbindung hergestellt wird. Alternativ kann der Verbindungskanal von einer Bohrung in der Kugel gebildet sein. Beispielsweise kann der Verbindungskanal T-förmig von dem Durchgangskanal abzweigen. Die Kugel mit T-förmigen Kanälen braucht nur zwei Stellungen: In der Wartungsstellung ist der Zugang zum Filterelement abgesperrt. Die Betriebsstellung ermöglicht den Fluss vom Bypass sowohl zum Auslass, als auch zum Filterelement.

Bei der Erfindung ist vorgesehen, dass der Heizungsfilter als Rückspülfilter ausgebildet ist. Die auslassseitige Absperrung kann bei einem ersten Ausführungsbeispiel zusätzlich in eine Rückspülstellung schaltbar sein, bei welcher die Strömung vom Bypasskanal in umgekehrter Richtung durch das Filterelement leitbar ist und das Armaturengehäuse einen Ablauf aufweist, durch welchen Rückspülwasser nach außen entsorgbar ist. Bei einer solchen Ausgestaltung sind drei Stellungen möglich:
- die Betriebsstellung für den normalen Betrieb, bei dem die einlassseitige und die auslassseitige Absperrung im Betriebsmodus die gesamte Strömung durchlassen,
- die Wartungsstellung, in der Einlass und Auslass vom Filterelement getrennt sind, und
- die Rückspülstellung, bei welcher der Filter rückgespült wird.

Die Wartung und die Rückspülung erfolgen mit der einlassseitigen Absperrung in der Absperrstellung, in welcher die Strömung durch den Bypasskanal geleitet wird. Die einlassseitige Absperrung nimmt folglich immer nur eine von zwei Stellungen ein.

Die auslassseitige Kugel kann drei Stellungen einnehmen: eine Betriebsstellung, eine Rückspülstellung und eine Wartungsstellung. Dies ist im ersten Ausführungsbeispiel illustriert. Vorteilhafterweise ist jedoch vorgesehen, dass die auslassseitige Kugel nur zwei Stellungen einnimmt und von einer Betriebs- und Rückspülstellung in eine Wartungsstellung bewegbar ist. Dies ist im zweiten Ausführungsbeispiel illustriert. In der Betriebs- und Rückspülstellung stellt der Verbindungskanal eine Verbindung zwischen dem Bypasskanal und dem Filterelement her. Der Verbindungskanal dient also zur Herstellung unterschiedlicher Verbindungen: einmal zur Verbindung des Bypasskanals mit dem Auslass und einmal zur Verbindung des Bypasskanals mit dem Filterelement zum Rückspülen in umgekehrter Richtung. Die Umschaltung von Betriebs- in die Rückspülstellung erfolgt mittels der einlassseitigen Absperrung. In der Wartungsstellung wird die Verbindung zwischen Bypass und Filterelement sowohl einlassseitig, als auch auslassseitig blockiert. Bei dieser Variante haben beide Absperrungen nur zwei Stellungen. Das vereinfacht die Bedienung und vermeidet Verwechslungen der Positionen.

Es kann weiterhin vorgesehen sein, dass auch die einlassseitige Absperrung von einem Kugelhahn gebildet ist, dessen Kugel eine Durchgangsbohrung aufweist, durch welche die Strömung in der Betriebsstellung vom Einlass zum Filterelement leitbar ist, und die eine Ausnehmung aufweist, welche in der Wartungsstellung eine Verbindung zwischen Einlass und Bypasskanal herstellt. Bei dieser Ausgestaltung ist die einlassseitige Absperrung ebenfalls von einem Kugelhahn gebildet, hat aber nur zwei Stellungen.

Es kann ferner vorgesehen sein, dass der Ablauf einen Kugelhahn oder andere Absperrung aufweist, die zum Rückspülen geöffnet wird. Bei dieser Ausgestaltung wird das Rückspülwasser entsorgt. Das dem Heizkreislauf zum Rückspülen entnommene Wasser kann über eine Befüllautomatik wieder nachgefüllt werden, so dass stets ein ausreichender Flüssigkeitsdruck im Kreislauf herrscht.

Das Filterelement kann beispielsweise von einem zylindrischen Metallsieb gebildet sein. Ein solches Sieb ist kostengünstig herstellbar und in der Wartungsstellung deutlich leichter zu reinigen, als beispielsweise eine Bürste, wie sie aus dem Stand der Technik bekannt ist.

Vorzugsweise ist vorgesehen, dass das Armaturengehäuse eine Filtertasse umfasst, in welcher das Filterelement angeordnet ist und welche lösbar mit dem übrigen Armaturengehäuse verbunden ist. Die Filtertasse kann beispielsweise mittels einer Schnellverbindung mit dem übrigen Armaturengehäuse verbindbar sein. Die Filtertasse kann beispielsweise angeflanscht, angeschraubt oder mit einem Bajonettverschluss befestigt werden. Eine Schnellverbindung, beispielsweise mit einem Rastverschluss, kann ohne Werkzeug auch an schlecht zugänglichen Orten leicht gelöst und sicher wieder befestigt werden. Dadurch wird der Austausch oder die Wartung und Reinigung des Filtersiebs erleichtert und beschleunigt.

Bei einer Ausgestaltung der Erfindung ist vorgesehen, dass der Einlass und der Auslass von koaxialen Stutzen gebildet sind, die an das Armaturengehäuse angeformt sind, das Filterelement in einem nach unten ragenden Teil des Armaturengehäuses angeordnet ist und der Bypasskanal horizontal außen am Armaturengehäuse entlang von der einlassseitigen Absperrung zur auslassseitigen Absperrung verläuft. Das Armaturengehäuse kann insbesondere mehrteilig ausgebildet sein. Es versteht sich, dass die Anordnung auch lageunabhängig eingebaut werden kann. Vorteilhafterweise ist dabei vorgesehen, dass das Armaturengehäuse einen Flansch in einer Vertikalebene aufweist, mit dem es an einem Flansch einer Anschlussarmatur befestigbar ist, welche in der Rohrleitung installiert ist. Das erlaubt die Installation des Filters mit nach unten gerichteter Filtertasse auch dann, wenn die Rohrleitung senkrecht verläuft.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung einer Heizungsfilteranordnung mit Einhausung gemäß einem ersten Ausführungsbeispiel.
- Fig.2: zeigt die Anordnung aus Figur 1 ohne Einhausung.
- Fig.3: zeigt die Anordnung aus Figur 2 als Explosionsdarstellung.
- Fig.4: zeigt einen Vertikalschnitt durch die Anordnung aus Figur 2 in Betriebsstellung.
- Fig.5: zeigt einen Vertikalschnitt durch die Anordnung aus Figur 2 in Wartungsstellung.
- Fig.6: zeigt einen Vertikalschnitt durch die Anordnung aus Figur 2 in Rückspülstellung.
- Fig.7: ist eine angeschnittene, perspektivische Darstellung der Anordnung aus Figur 2 in der Wartungsstellung.
- Fig.8: ist eine angeschnittene, perspektivische Darstellung der Anordnung aus Figur 2 in der Rückspülstellung.
- Fig.9: ist eine perspektivische Darstellung einer Kugel mit einer Ausnehmung für eine einlass- oder auslassseitige Absperrung für die Anordnung aus Figur 2.
- Fig.10: ist ein Horizontalschnitt durch die Anordnung aus Figur 2 in Wartungsstellung.
- Fig. 11: ist ein Horizontalschnitt durch die Anordnung aus Figur 2 in Rückspülstellung.
- Fig.12: ist eine perspektivische Darstellung einer Heizungsfilteranordnung in Betriebsstellung gemäß einem zweiten Ausführungsbeispiel.
- Fig.13: zeigt die Heizungsfilteranordnung aus Figur 12 in Wartungsstellung.
- Fig.14: zeigt die Heizungsfilteranordnung aus Figur 12 in Rückspülstellung.
- Fig.15: zeigt die Heizungsfilteranordnung aus Figur 12 von der Seite.
- Fig.16: zeigt die Heizungsfilteranordnung aus Figur 12 von vorne.
- Fig.17: ist ein Vertikalschnitt durch die Heizungsfilteranordnung aus Figur 12 entlang der Rohrachse.
- Fig.18: ist ein Vertikalschnitt durch die Heizungsfilteranordnung aus Figur 12 senkrecht zur Rohrachse auf der Höhe des Filterelements.
- Fig.19: zeigt die Heizungsfilteranordnung aus Figur 12 von hinten.
- Fig.20: ist ein Horizontalschnitt durch die Heizungsfilteranordnung aus Figur 12 in Betriebsstellung.
- Fig.21: ist ein Vertikalschnitt durch die Heizungsfilteranordnung aus Figur 13 entlang der Rohrachse in Wartungsstellung.
- Fig.22: ist ein Horizontalschnitt durch die Heizungsfilteranordnung aus Figur 13 in Wartungsstellung.
- Fig.23: ist ein Vertikalschnitt durch die Heizungsfilteranordnung aus Figur 14 entlang der Rohrachse in Rückspülstellungstellung.
- Fig.24: ist ein Horizontalschnitt durch die Heizungsfilteranordnung aus Figur 14 in Rückspülstellung.

### Beschreibung der Ausführungsbeispiele

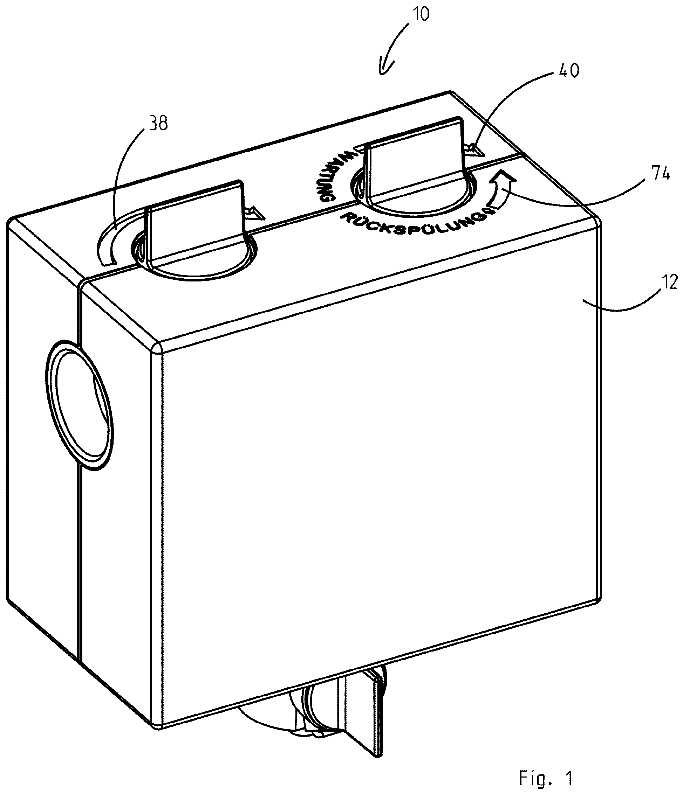

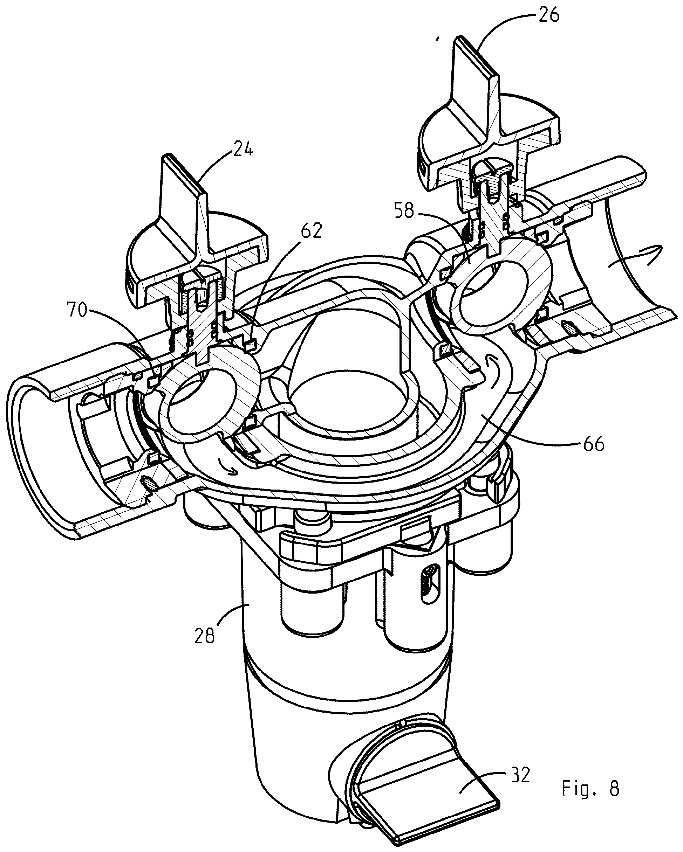

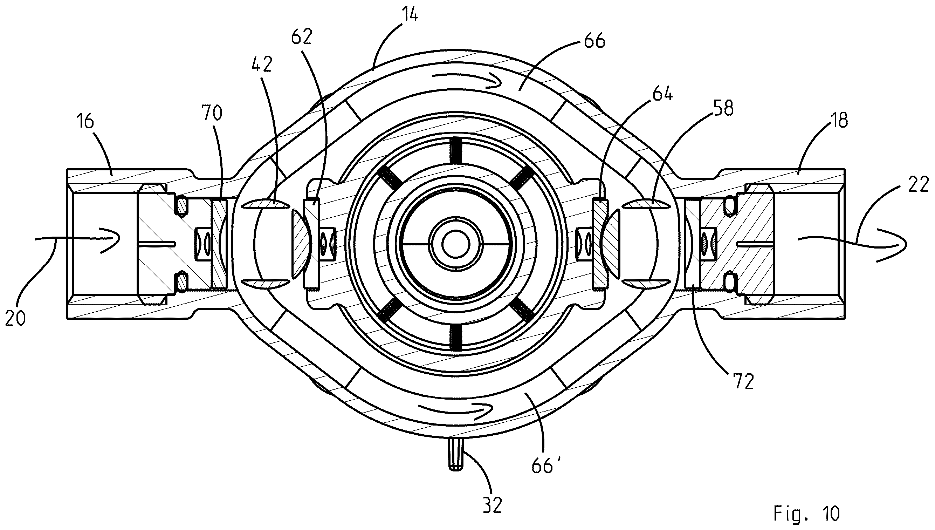

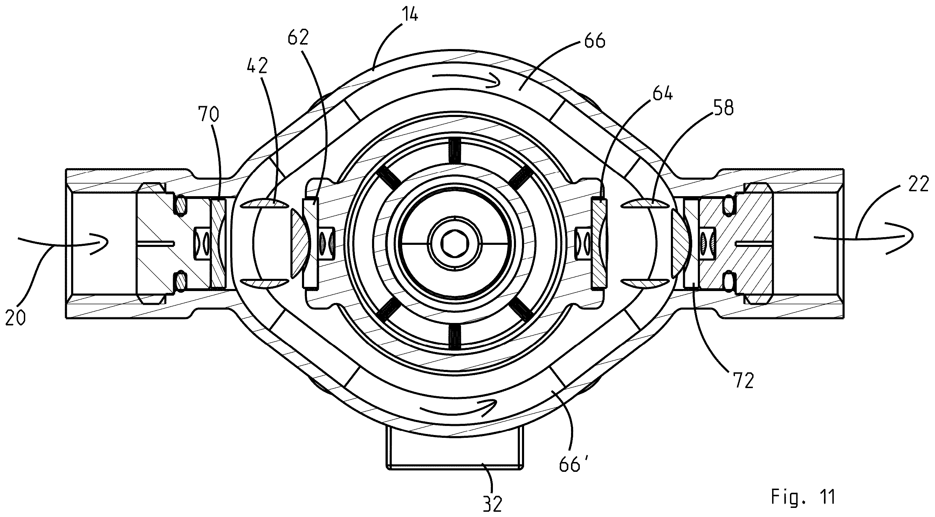

### 1.Ausführungsbeispiel (Fig.1-11)

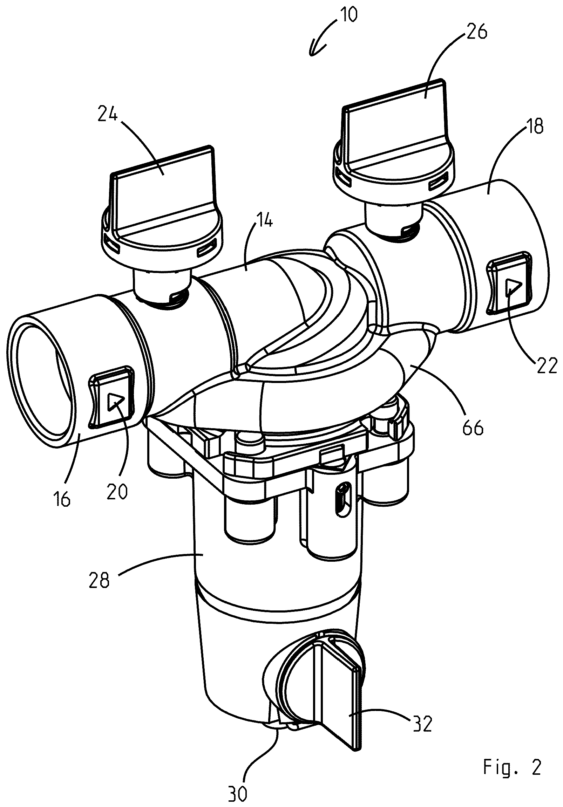

Figuren 1-11 zeigen eine allgemein mit 10 bezeichnete Heizungsfilteranordnung. Figur 1 zeigt die Heizungsfilteranordnung 10 mit einer Umhausung 12, die eine Wärmeisolation bildet, vor Staub und anderen Umwelteinflüssen schützt und die Anordnung vor unbefugtem Zugriff schützt. Die übrigen Figuren 2-11 zeigen die Anordnung 10 ohne Umhausung 12. Der Heizungsfilter ist für die Reinigung von Heizungswasser in Heizkreisläufen vorgesehen. Es ist aber auch möglich, den Filter in anderen Fluidinstallationen, etwa Kühlkreisläufen oder Trinkwasserinstallationen einzusetzen.

Die Heizungsfilteranordnung 10 umfasst ein Armaturengehäuse 14 mit einem Einlass 16 und einem Auslass 18. Wasser fließt in Richtung der Pfeile 20 von der Rohrleitung (nicht dargestellt) des Heizkreislaufs in das Armaturengehäuse 14 hinein und in Richtung der Pfeile 22 aus dem Armaturengehäuse 14 wieder heraus zurück in die Rohrleitung des Heizkreislaufs.

Das Armaturengehäuse 14 ist mit einer einlassseitigen Absperrung 24 und einer auslassseitigen Absperrung 26 versehen. Die Absperrungen 24 und 26 sind im vorliegenden Ausführungsbeispiel als handbetätigte Kugelhähne ausgebildet. Es versteht sich, dass auch andere Absperrungen, auch automatisch betätigbare Absperrungen, verwendet werden können.

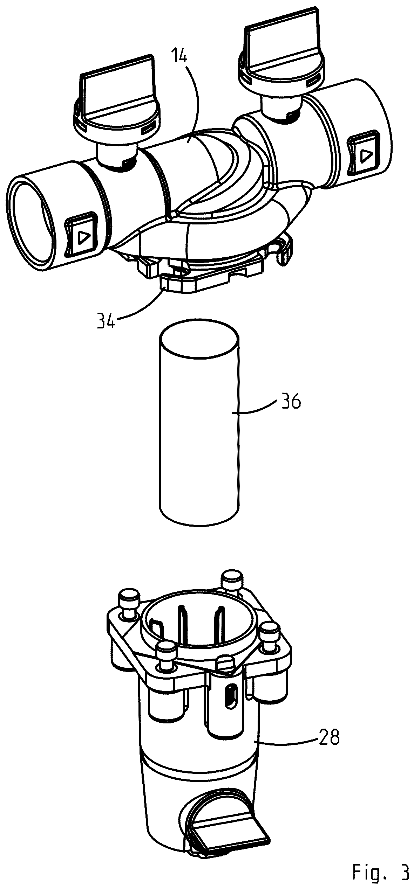

An der Unterseite des Armaturengehäuses 14 ist eine Filtertasse 28 angeflanscht. Am unteren Ende der Filtertasse 28 ist ein Ablauf 30 vorgesehen, welcher mit einem Kugelhahn 32 absperrbar ist. Figur 3 zeigt die vom übrigen Armaturengehäuse 14 gelöste Filtertasse 28. Die Filtertasse 28 ist mit einem Schnellverschluss an einen Flansch 34 auf der Unterseite des Armaturengehäuses 14 anflanschbar. Im vorliegenden Ausführungsbeispiel handelt es sich um einen Bajonettverschluss mit Rastmechanismus, welcher ohne Werkzeug durch einfaches drehen lösbar und anschließbar ist.

In der Filtertasse 28 sitzt ein herausnehmbares Filterelement in Form eines zylindrischen Stahlsiebes 36. Zum Reinigen oder Ersetzen des Stahlsiebes 36 können die Absperrungen 24 und 26 geschlossen werden, die Filtertasse 28 gelöst und das Stahlsieb 36 entnommen und wieder eingesetzt werden. Es versteht sich, dass auch andere Filterelemente verwendet werden können. Zum Schließen der Absperrungen 24 und 26 werden die zugehörigen Handgriffe in Richtung der in Figur 1 erkennbaren Pfeile 38 und 40 bewegt.

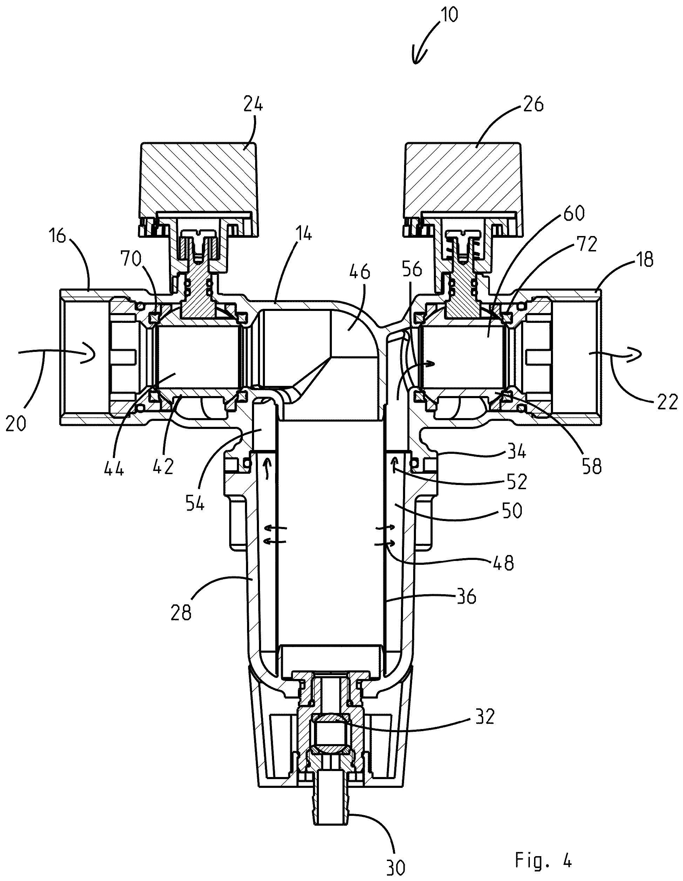

Figur 4 zeigt die Heizungsfilteranordnung 10 in der Betriebsstellung. Wasser fließt in Richtung des Pfeils 20 durch den Einlass 16 in das Armaturengehäuse 14 hinein. Die Kugel 42 des einlassseitigen Kugelhahns 24 weist eine Durchgangsbohrung 44 auf, welche in der Betriebsstellung mit dem Einlass 16 fluchtet. Entsprechend ist der Kugelhahn 24 geöffnet. Das Wasser fließt in einen nach unten abknickenden Eingangskanal 46 im Armaturengehäuse 14. Von dort fließt das Wasser durch den Flanschanschluss 34 in das Innere der Filtertasse 28 und des darin befindlichen Filterelements 36.

Der Ablauf 30 mit dem Kugelhahn 32 ist in der Betriebsstellung abgesperrt. Dies ist in Figur 4 gut zu erkennen. Das Wasser fließt vom Innenraum des Filterelements 36 in Richtung der Pfeile 48 durch das Filterelement 36 in einen Ringraum 50. Der Ringraum 50 ist zwischen der Innenwandung der Filtertasse 28 und dem Filterelement 36 gebildet.

Beim Durchströmen des Filterelements 36 werden Partikel, die sich im Heizungswasser befinden, zurückgehalten. Das gefilterte Wasser fließt im Ringraum 50 in Richtung der Pfeile 52 nach oben zurück in das Armaturengehäuse 14. Ein ringförmiger Ausgangskanal 54 im Armaturengehäuse 14 ist um den Eingangskanal 46 herum gebildet. Das Wasser fließt vom Ringraum 50 in den Ausgangskanal 54 und von dort in Richtung des Pfeils 56 durch die Absperrung 26 zum Auslass 18.

Die Absperrung 26 ist ebenfalls als Kugelhahn mit einer Kugel 58 ausgebildet. In der in Figur 4 gezeigten Betriebsstellung fluchtet eine in der Kugel 58 vorgesehene Durchgangsbohrung 60 mit dem Ausgangskanal und dem Auslass. Entsprechend kann das Wasser durch die so geöffnete Absperrung fließen.

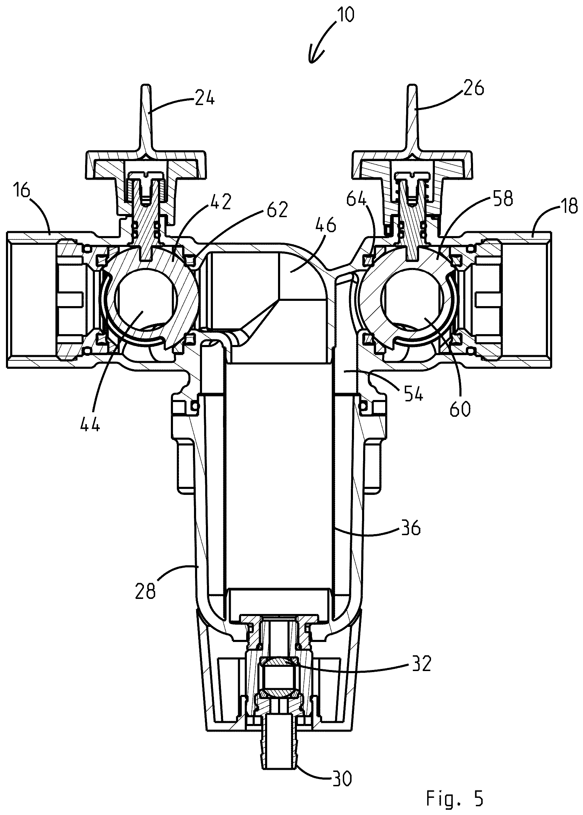

Figur 5 zeigt die Anordnung 10 in der Wartungsstellung. In dieser Stellung sind die Kugeln 42 und 58 der Kugelhähne 24 und 26 um einen Winkel von 90 Grad verdreht. Es kann kein Wasser durch die Durchgangsbohrungen 44 und 60 fließen. Die Kugel 42 ist mit einer Dichtung 62 gegenüber dem Eingangskanal 46 abgedichtet. Es kann in der Wartungsstellung also kein Wasser an der Kugel 42 vorbei zum Eingangskanal 46 fließen. Die Kugel 58 ist mit einer Dichtung 64 gegenüber dem Ausgangskanal 54 abgedichtet. Es kann also kein Wasser vom Ausgangskanal 54 zum Auslass 18 fließen.

Zum Warten, d.h. Reinigen und/oder Austauschen des Filterelements 36, werden zunächst die Absperrungen 24 und 26 in der oben beschriebenen Weise betätigt. Dann wird die Absperrung 32 am Ablauf 30 geöffnet, so dass Restwasser abfließen kann und die Filtertasse druckentlastet wird. Anschließend kann die Filtertasse 28 gelöst und das Filterelement 36 entnommen werden.

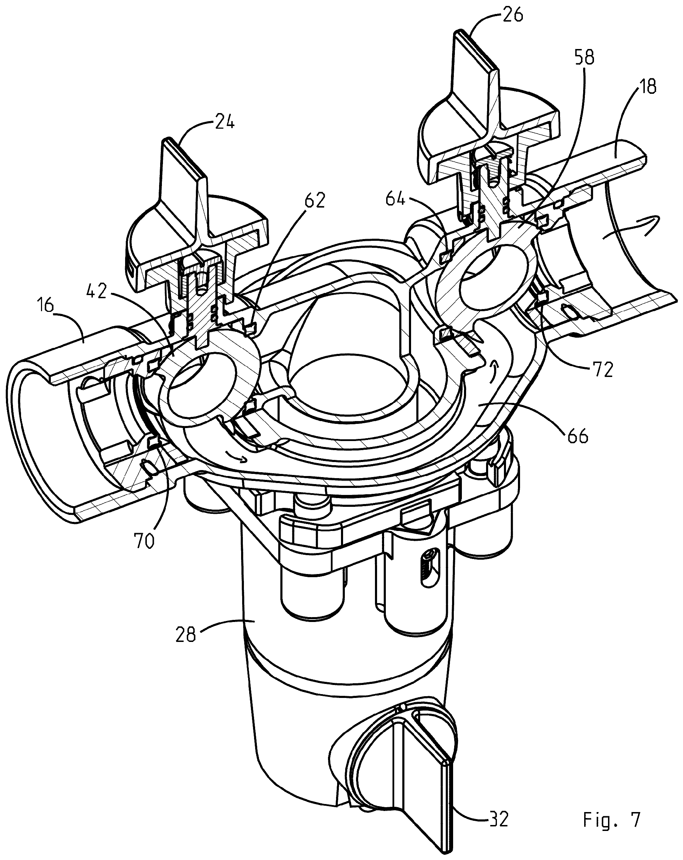

Es ist wünschenswert, dass der Heizkreislauf während der Wartung nicht unterbrochen wird. Es ist daher ein Bypasskanal 66 vorgesehen, der vom Einlass 16 am Filter vorbei zum Auslass 18 geführt ist. Der Bypass 66 ist in den Figuren 7, 8, 10 und 11, sowie in Figur 2 gut zu erkennen.

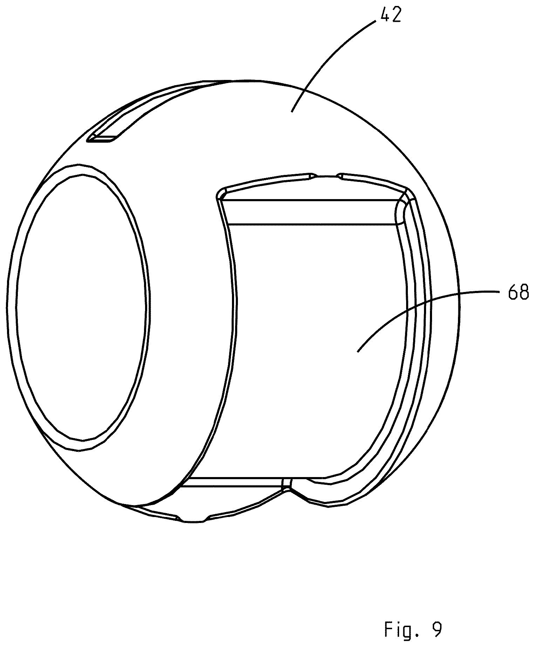

Die Kugeln 42 und 58 der Kugelhähne 24 und 26 sind jeweils mit einer Ausnehmung 68 versehen. Die Ausnehmung 68 ist in Figur 9 gut zu erkennen. Im Bereich der Ausnehmung 68 weicht die Oberfläche der Kugel von der Kugelform ab und hat einen kleineren Radius. Die Kugeln 42 und 58 sind derart angeordnet, dass die Ausnehmung in der in Figur 5 gezeigten Wartungsstellung einlassseitig bzw. auslassseitig angeordnet sind. Im Bereich der Dichtungen 62 und 64 weicht die Oberfläche nicht von der Kugelform ab, so dass dort die Strömung vollständig unterbrochen ist. Im Bereich der Ausnehmungen 68 hingegen kann die Strömung an der Kugel 42 bzw. 58 vorbei fließen. In der Wartungsstellung fließt das Wasser vom Einlass 16 an der Kugel 42 vorbei in den Bypass 66. Vom Bypass 66 fließt das Wasser durch die Ausnehmung an der Kugel 58 vorbei zum Auslass 18. Auf diese Weise fließt das Heizungswasser weiterhin durch den Heizkreislauf. Der Heizkreislauf wird auch während der Wartung nicht unterbrochen. Es wird lediglich während der Wartung nicht gefiltert. Da es sich um einen geschlossenen Heizkreislauf handelt, ist dies jedoch nicht schlimm. Eventuell vorhandene oder neu gebildete Partikel werden herausgefiltert, sobald die Wartung abgeschlossen und die Anordnung wieder in den Betriebszustand versetzt wird.

In Figur 4 ist zu erkennen, dass Dichtungen 70 und 72 an den Kugelhähnen vorgesehen sind, welche den Durchgang zum Bypass im Betriebszustand verschließen. Dann fließt die gesamte Strömung durch das Filterelement 36. Im vorliegenden Ausführungsbeispiel umfasst der Bypass 66 zwei Kanäle 66 und 66', die beidseitig außen an dem Armaturengehäuse 14 angeformt sind. Es versteht sich, dass ein Kanal 66 ausreichend sein kann oder auch mehr oder weniger Kanäle auch an anderer Stelle für den Bypass vorgesehen sein können.

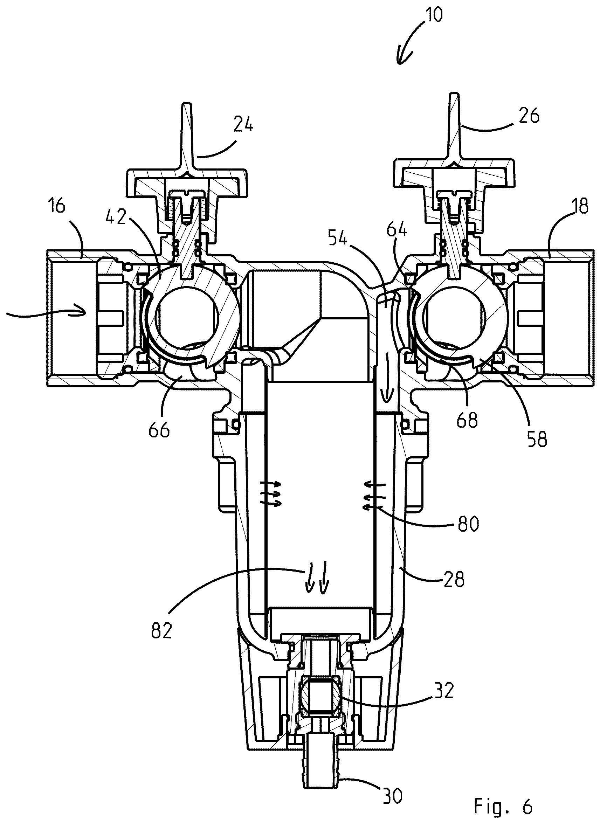

Zusätzlich zur Entnahme und manuellen Reinigung des Filterelements 36 in der Wartungsstellung ermöglicht die vorliegend beschriebene Anordnung 10 auch die einfache Rückspülung des Filterelements 36. Zur Durchführung der Rückspülung wird die einlassseitige Absperrung 24 wiederum in die Absperrstellung bewegt, wie dies in Figur 6 gezeigt ist. Das Wasser fließt dann, wie oben beschrieben, an der Kugel 42 des Kugelhahns 24 vorbei in den Bypass 66. Die Kugel 58 der auslassseitigen Absperrung 26 wird in Richtung des in Figur 1 gezeigten Pfeils 74 in eine Rückspülstellung bewegt. Die Bewegung erfolgt aus der Betriebsstellung heraus in entgegengesetzter Richtung zu der Richtung der Bewegung in die Wartungsstellung. Entsprechend befindet sich die Ausnehmung 68 in der Kugel 58 auf der Seite der Dichtung 64 zum Auslasskanal 54. Die Abmessungen der Ausnehmung 68 sind so groß, dass über die Ausnehmung 68 eine Verbindung zwischen auslassseitigem Ende des Bypasses 66 und dem Auslasskanal 54 hergestellt wird.

In der in Figur 6, 8 und 11 dargestellten Rückspülstellung wird das Wasser also vom Bypasskanal 66 an der Kugel 58 vorbei in den Auslasskanal 54 geleitet. Gleichzeitig wird der Kugelhahn 32 am Ablauf 30 geöffnet. Dann kann das Wasser in umgekehrter Richtung in Richtung der Pfeile 80 durch das Filterelement 36 in den Innenraum des Filterelements 36 fließen. Von dort aus kann es durch den geöffneten Kugelhahn 32 und den Ablauf 30 nach außen entsorgt werden. Dies ist durch Pfeile 82 illustriert. Das in umgekehrter Richtung durchströmte Filterelement 36 wird in dieser Rückspülstellung rückgespült. Partikel, die auf der Innenseite des Filterelements 36 haften, werden mit dem Rückspülströmung mitgerissen. Auf diese Weise kann das Filterelement gereinigt werden, ohne dass die Filtertasse entfernt werden muss. Wasser, welches nach außen abfließt, kann mittels einer Befüllautomatik nachgefüllt werden, so dass der Druck im Heizkreislauf aufrecht erhalten bleibt.

Bei einer ersten Variante erfolgt die Rückspülung mit der gesamten Strömung. Dann gelangt kein Wasser zum Auslass und der Heizkreislauf ist unterbrochen. Alternativ kann bei einer zweiten Variante vorgesehen sein, dass ein Teil des Wassers vom Auslass zurück in den Heizkreislauf geleitet wird, und ein anderer Teil des Wassers zum Rückspülen des Filterelements 36 verwendet und anschließend über den Ablauf entsorgt wird.

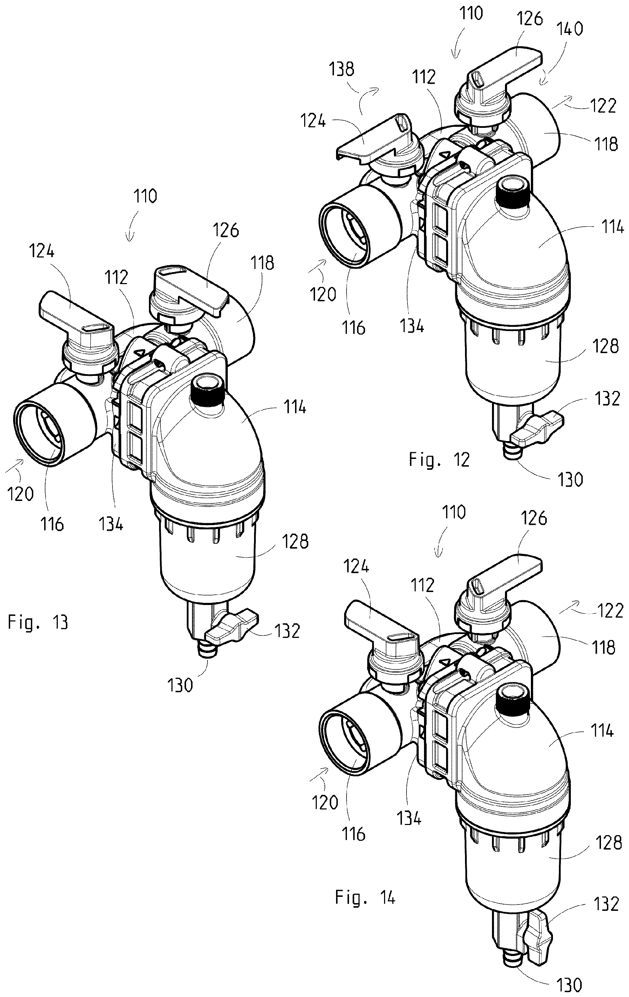

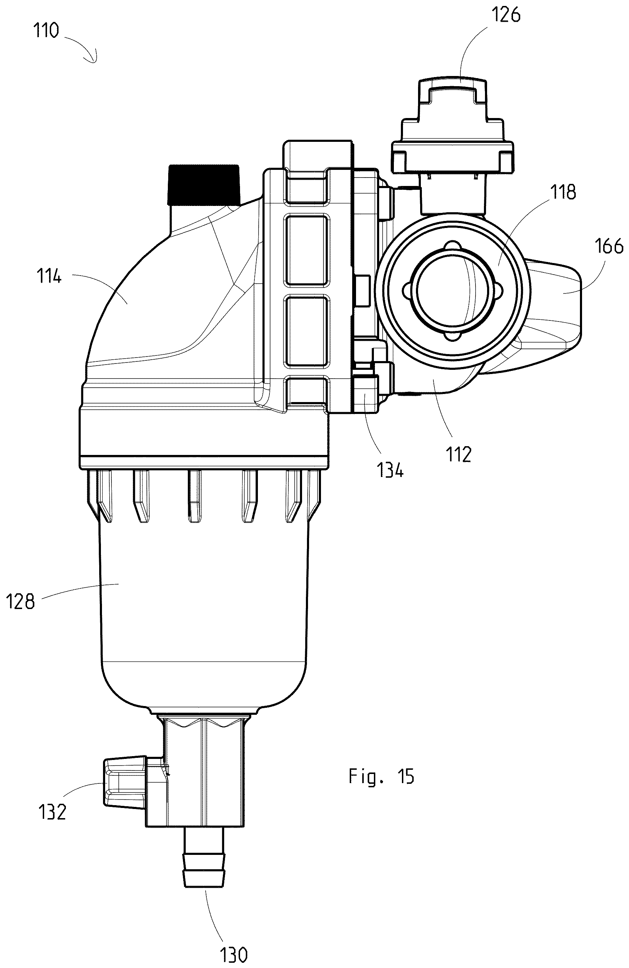

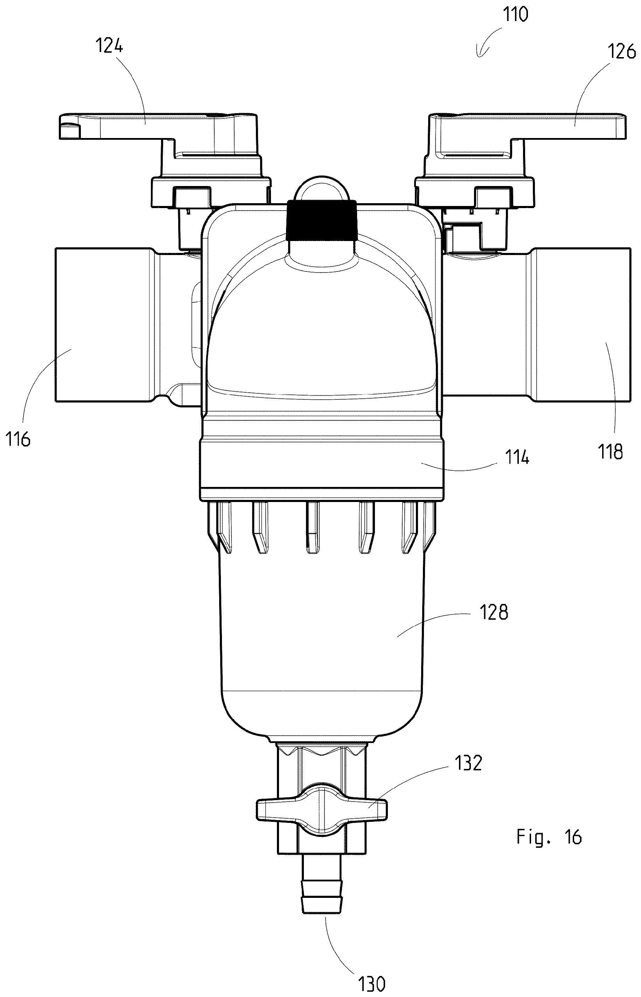

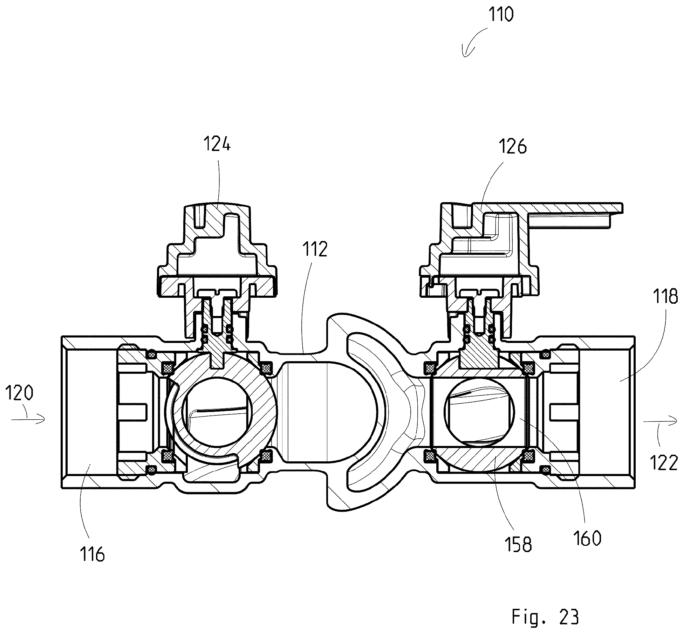

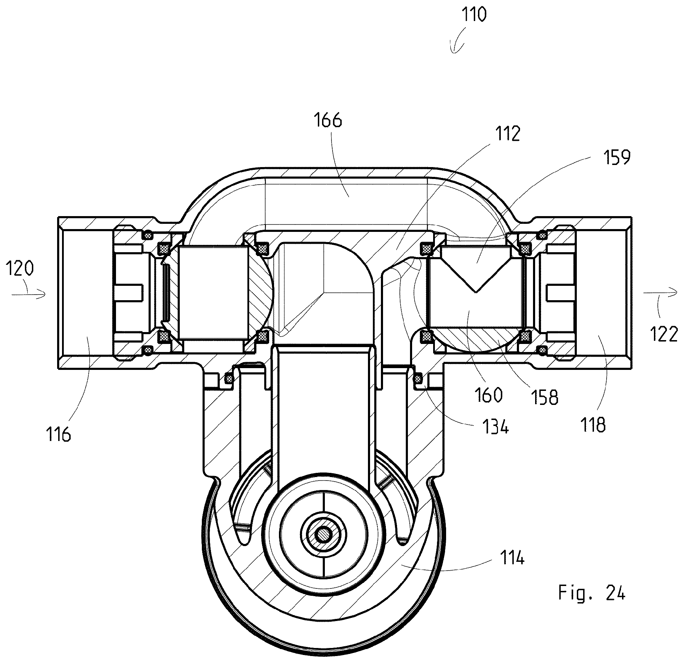

### 2.Ausführungsbeispiel (Fig.12-24)

Figuren 12-24 zeigen ein alternatives Ausführungsbeispiel für eine Heizungsfilteranordnung 110. Die Heizungsfilteranordnung 110 umfasst eine Anschlussarmatur 112 mit einem Einlass 116 und einem Auslass 118. Wasser fließt in Richtung der Pfeile 120 von der Rohrleitung (nicht dargestellt) des Heizkreislaufs in das die Anschlussarmatur 112 hinein und in Richtung der Pfeile 122 aus der Anschlussarmatur 112 wieder heraus zurück in die Rohrleitung des Heizkreislaufs.

Die Anschlussarmatur 112 ist mit einer einlassseitigen Absperrung 124 und einer auslassseitigen Absperrung 126 versehen. Die Absperrungen 124 und 126 sind im vorliegenden Ausführungsbeispiel als handbetätigte Kugelhähne ausgebildet. Es versteht sich, dass auch andere Absperrungen, etwa automatisch betätigbare Absperrungen, verwendet werden können.

Die Anschlussarmatur 112 ist mit einem Flansch 134 versehen. An dem Flansch 134 ist ein Armaturengehäuse 114 angeflanscht. An der Unterseite des Armaturengehäuses 114 ist eine Filtertasse 128 angeschraubt. Am unteren Ende der Filtertasse 128 ist ein Ablauf 130 vorgesehen, welcher mit einem Kugelhahn 132 absperrbar ist. Das Armaturengehäuse 114 ist mit einem Schnellverschluss an den Flansch 134 seitlich an der Anschlussarmatur angeflanscht. Im vorliegenden Ausführungsbeispiel handelt es sich um einen Bajonettverschluss mit Rastmechanismus, welcher ohne Werkzeug durch einfaches drehen lösbar und anschließbar ist.

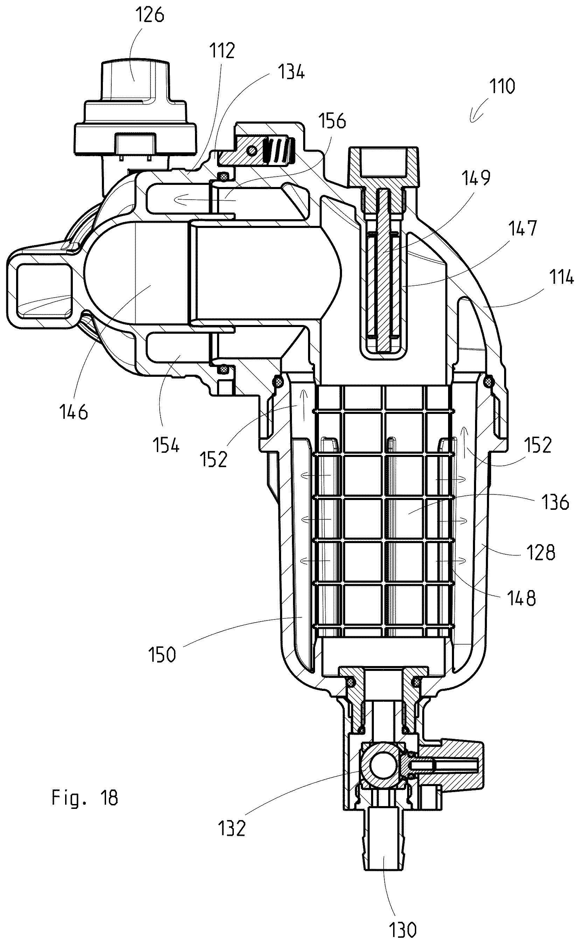

In der Filtertasse 128 sitzt wie beim ersten Ausführungsbeispiel ein herausnehmbares Filterelement in Form eines zylindrischen Stahlsiebes 136. Dies ist in Figur 18 zu erkennen. Zum Reinigen oder Ersetzen des Stahlsiebes 136 können die Absperrungen 124 und 126 geschlossen werden, die Filtertasse 128 gelöst und das Stahlsieb 136 entnommen und wieder eingesetzt werden. Es versteht sich, dass auch andere Filterelemente verwendet werden können. Zum Schließen der Absperrungen 124 und 126 werden die zugehörigen Handgriffe in Richtung der in Figur 12 erkennbaren Pfeile 138 und 140 bewegt. Die so erreichte Wartungsstellung ist in Figur 13, 21 und 22 gezeigt.

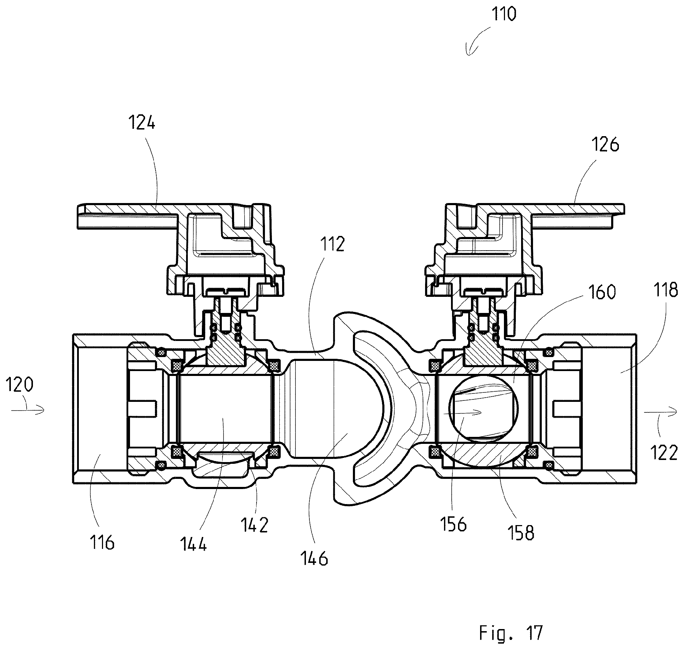

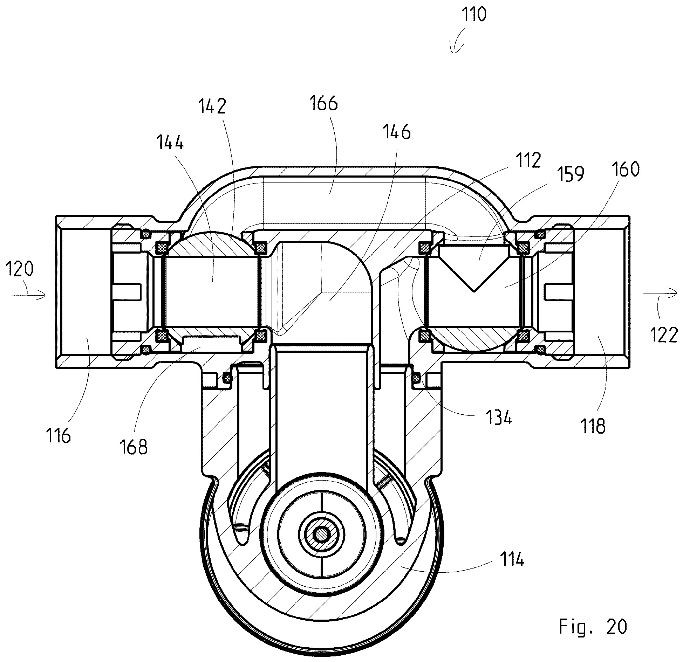

Figuren 12 und 15 bis 20 zeigen die Heizungsfilteranordnung 110 in der Betriebsstellung. Wasser fließt in Richtung des Pfeils 120 durch den Einlass 116 und in die Anschlussarmatur 112 hinein. Die Kugel 142 des einlassseitigen Kugelhahns 124 weist eine Durchgangsbohrung 144 auf, welche in der Betriebsstellung mit dem Einlass 116 fluchtet. Entsprechend ist der Kugelhahn 124 geöffnet. Das Wasser fließt in einen seitlich abknickenden Eingangskanal 146 im Gehäuse der Anschlussarmatur 112. Dies ist in Figur 17 und Figur 20 gut zu erkennen. Der Eingangskanal 146 ist im vorliegenden Ausführungsbeispiel von einem Zentralkanal gebildet, der von einem Ringkanal 154 umgeben ist. Dies ist in Figur 18 gut zu erkennen. Der Ringkanal 154 bildet einen Ausgangskanal, der mit dem Auslass 118 verbunden ist. Vom Eingangskanal 146 fließt das Wasser durch den Flanschanschluss 134 und das Armaturengehäuse 114 in das Innere der Filtertasse 128 und des darin befindlichen Filterelements 136. Dies ist in Figur 18 gut zu erkennen.

Im Armaturengehäuse 114 ist eine nach oben offene Tasche 147 vorgesehen. In die Tasche 147 ist ein Magnet 149 einführbar. Magnetisierbare Partikel, die sich im Wasser befinden, werden durch den Magneten 149 zurückgehalten und haften wasserseitig an der Wandung der Tasche 147. Beim Rückspülen kann der Magnet 149 abgezogen werden. Dann endet die Haftung und die Partikel werden mit nach außen gespült.

Ein Ablauf 130 mit dem Kugelhahn 132 ist in der Betriebsstellung abgesperrt. Dies ist in Figur 18 gut zu erkennen. Das Wasser fließt vom Innenraum des Filterelements 136 in Richtung der Pfeile 148 durch das Filterelement 136 in einen Ringraum 150. Der Ringraum 150 ist zwischen der Innenwandung der Filtertasse 128 und dem Filterelement 136 gebildet.

Beim Durchströmen des Filterelements 136 werden Partikel, die sich im Heizungswasser befinden, zurückgehalten. Das gefilterte Wasser fließt im Ringraum 150 in Richtung der Pfeile 152 nach oben zurück in das Armaturengehäuse 114. Der ringförmige Ausgangskanal 154 im Armaturengehäuse 114 ist um den Eingangskanal 146 herum gebildet. Das Wasser fließt vom Ringraum 150 in den Ausgangskanal 154 und von dort in Richtung des Pfeils 156 durch die Absperrung 126 zum Auslass 118.

Die Absperrung 126 ist ebenfalls als Kugelhahn mit einer Kugel 158 ausgebildet. In der Betriebsstellung fluchtet eine in der Kugel 158 vorgesehene Durchgangsbohrung 160 mit dem Ausgangskanal und dem Auslass. Entsprechend kann das Wasser durch die so geöffnete Absperrung fließen.

Figuren 13, 21 und 22 zeigen die Anordnung 110 in der Wartungsstellung. In dieser Stellung sind die beiden Kugeln 142 und 158 der Kugelhähne 124 und 126 um einen Winkel von 90 Grad verdreht. Dies ist anhand der Handgriffe der Kugelhähne in Figur 13 gut zu erkennen. In dieser Stellung sperrt die Kugel 142 den Zugang zum Filterelement. Die Kugel 142 ist mit einer Dichtung 162 gegenüber dem Eingangskanal 146 abgedichtet. Es kann in der Wartungsstellung also kein Wasser an der Kugel 142 vorbei zum Eingangskanal 146 fließen. Die Kugel 158 ist mit einer Dichtung 164 gegenüber dem Ausgangskanal 154 abgedichtet. Es kann also kein Wasser vom Ausgangskanal 154 zum Auslass 118 oder umgekehrt fließen. Es kann folglich kein Wasser in die Filtertasse 128 gelangen.

Zum Warten, d.h. Reinigen und/oder Austauschen des Filterelements 136, werden zunächst die Absperrungen 124 und 126 in der oben beschriebenen Weise betätigt. Dann wird die Absperrung 132 am Ablauf 130 geöffnet, so dass Restwasser abfließen kann und die Filtertasse druckentlastet wird. Anschließend kann die Filtertasse 128 gelöst und das Filterelement 136 entnommen werden.

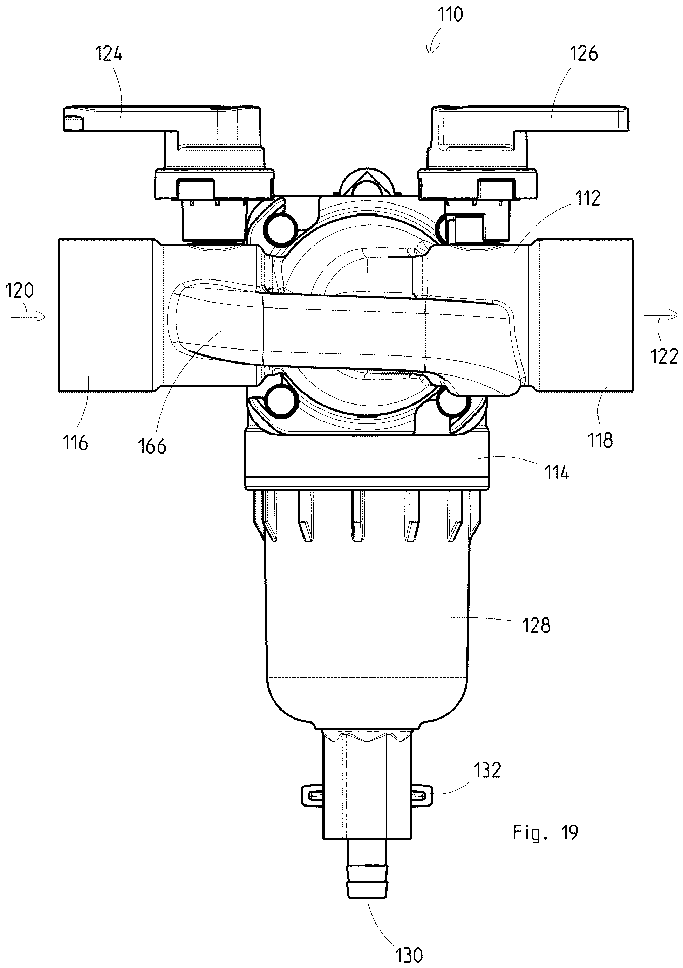

Wie beim ersten Ausführungsbeispiel wird der Heizkreislauf während der Wartung nicht unterbrochen, indem ein Bypasskanal 166 vorgesehen ist, der vom Einlass 116 am Filter vorbei zum Auslass 118 geführt ist. Der Bypass 166 ist in den Figuren 19, 20, 22 und 24 gut zu erkennen.

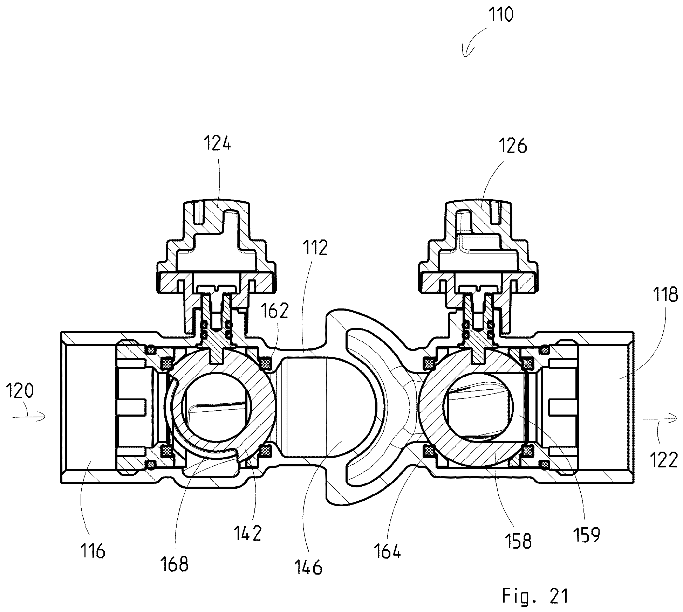

Die Kugel 142 des Kugelhahns 124 ist mit einer Ausnehmung 168 versehen. Die Ausnehmung 168 ist in Figur 21 gut zu erkennen. Im Bereich der Ausnehmung 168 weicht die Oberfläche der Kugel von der Kugelform ab und hat einen kleineren Radius. Die Kugel 142 ist derart angeordnet, dass die Ausnehmung in der in Figur 21 gezeigten Wartungsstellung einlassseitig angeordnet ist. Im Bereich der Dichtung 162 weicht die Oberfläche nicht von der Kugelform ab, so dass dort die Strömung vollständig unterbrochen ist. Im Bereich der Ausnehmungen 168 hingegen kann die Strömung an der Kugel 142 vorbei fließen. In der Wartungsstellung fließt das Wasser vom Einlass 116 an der Kugel 142 vorbei in den Bypass 166.

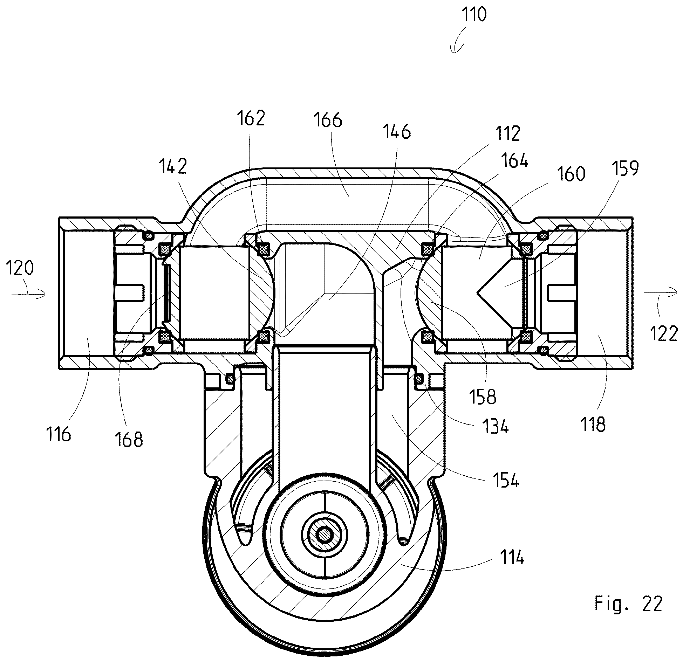

Vom Bypass 166 fließt das Wasser zur Kugel 158. Die Kugel 158 hat einen Verbindungskanal 159, der T-förmig vom Durchgangskanal 160 abgeht. In der in Figur 20 gezeigten Betriebsstellung ist der Verbindungskanal 159 zum Bypass 166 geöffnet. Da der Bypass 166 aber einlassseitig durch die Kugel 142 verschlossen ist, fließt dort kein Wasser. Durch Drehen der Kugel 158 um einen Winkel von 90 Grad in die in Figur 22 gezeigte Wartungsstellung öffnet der Verbindungskanal 159 zum Auslass 118. Der Durchgangskanal 160 ist mit dem Bypass verbunden. Wasser kann in dieser Stellung vom Bypass 166 durch den Durchgangskanal 160 und den Verbindungskanal 159 zum Auslass 118 fließen, während das Filterelement entnommen werden kann. Wie beim ersten Ausführungsbeispiel fließt ungefiltertes Heizungswasser weiterhin durch den Heizkreislauf. Im Betriebszustand fließt die gesamte Strömung durch das Filterelement 136 und im Wartungszustand fließt die gesamte Strömung durch den Bypass 166.

Zur Durchführung einer Rückspülung wird die einlassseitige Absperrung 124 ebenfalls in die Absperrstellung bewegt, wie dies in Figur 14, 23 und 24 gezeigt ist. Das Wasser fließt dann, wie oben beschrieben, vollständig an der Kugel 142 des Kugelhahns 124 vorbei in den Bypass 166. Es fließt kein Wasser durch das Filterelement 136. Die Kugel 158 der auslassseitigen Absperrung 126 bleibt in der in Betriebsstellung und muss nicht bewegt werden.

In dieser Rückspülstellung wird das Wasser durch den nun einlassseitig geöffneten Bypasskanal 166 und durch den Verbindungskanal 159 zum Durchgangskanal 160, d.h. sowohl zum Auslass 118, als auch in umgekehrter Richtung zum Filterelement 136 geleitet. Dabei wird die Strömung aufgeteilt. Ein Teil des Wassers bleibt im Heizkreislauf. Ein anderer Teil wird zur Rückspülung verwendet.

Gleichzeitig wird der Kugelhahn 132 am Ablauf 130 geöffnet. Dann kann Wasser wie im ersten Ausführungsbeispiel zum Rückspülen in umgekehrter Richtung durch das Filterelement 136 in den Innenraum des Filterelements 136 fließen. Von dort aus kann es durch den geöffneten Kugelhahn 132 und den Ablauf 130 nach außen entsorgt werden.

Das zweite Ausführungsbeispiel hat gegenüber dem ersten Ausführungsbeispiel den Vorteil, dass jede Absperrung nur zwei verschiedene Stellungen einnehmen kann und daher leichter zu bedienen ist. Die Verwendung einer Armatur mit einem vertikalen Flansch 134 erlaubt die Verwendung der Anordnung auch dann, wenn die Rohrleitung senkrecht verläuft. Der Heizkreislauf ist auch bei Rückspülung nicht unterbrochen.

Die vorstehende Erfindung wurde hier anhand von konkreten Ausführungsbeispielen beschrieben. Die Beschreibung dient jedoch nur zur Illustration der Erfindung. Der Umfang der Erfindung lässt eine Vielzahl von Variationen zu, die ausschließlich vom Schutzbereich der beigefügten Ansprüche bestimmt werden. So sind bestimmte Merkmale hinsichtlich Konstruktion, Material, Anordnung und Aufbau des Ausführungsbeispiels lediglich sinnvolle Ausgestaltungen. Die Anschlüsse können jede beliebige, dem Fachmann bekannte Ausgestaltung annehmen. Dies gilt für alle Merkmale und deren Kombinationen, solange in den Ansprüchen nicht eine bestimmte Kombination von Merkmalen als erfindungswesentlich offenbart ist.

## Patentansprüche

1. Rückspülbare Heizungsfilteranordnung (10; 110) zum Herausfiltern von Partikeln aus Heizungswasser in einem Heizkreislauf enthaltend:
(a) ein Armaturengehäuse (14; 112, 114) mit einem Einlass (16; 116) und einem Auslass (18; 118) zum Einbau in eine Rohrleitung des Heizkreislaufs;
(b) ein strömungsmäßig zwischen Einlass und Auslass angeordnetes Filterelement (36; 136);
(c) einen Bypasskanal (66; 166), welcher an dem Filterelement vorbei vom Einlass zum Auslass geführt ist; und
(d) eine einlassseitige Absperrung (24; 124), welche von einer Betriebsstellung, in welcher der Bypasskanal blockiert ist und die Strömung zum Filterelement durchgelassen wird, in eine Absperrstellung schaltbar ist, bei welcher die Strömung zum Filterelement blockiert ist und zum Bypasskanal geleitet wird;
**dadurch gekennzeichnet, dass**
(e) auslassseitig ein Kugelhahn (26; 126) mit einem Durchgangskanal (60; 160) und einem Verbindungskanal (159) vorgesehen ist, welcher von einer Betriebsstellung, bei welcher die Strömung vom Filterelement durch den Durchgangskanal zum Auslass durchgelassen wird, in eine Wartungsstellung schaltbar ist, bei welcher die Strömung vom Bypasskanal durch den Verbindungskanal zum Auslass geleitet wird.

2. Heizungsfilteranordnung nach Anspruch 1, **dadurch gekennzeichnet, dass** der Verbindungskanal (159) T-förmig von dem Durchgangskanal (160) abzweigt.

3. Heizungsfilteranordnung nach Anspruch 1 oder 2, **dadurch gekennzeichnet, dass** die auslassseitige Absperrung in eine Rückspülstellung schaltbar ist, bei welcher die Strömung vom Bypasskanal (66; 166) in umgekehrter Richtung durch das Filterelement leitbar ist und das Armaturengehäuse einen Ablauf (30; 130) aufweist, durch welchen Rückspülwasser nach außen entsorgbar ist.

4. Heizungsfilteranordnung nach Anspruch 2 und 3, **dadurch gekennzeichnet, dass** die auslassseitige Kugel (58; 158) in die Rückspülstellung bewegbar ist, in welcher der Verbindungskanal (159) eine Verbindung zwischen dem Bypasskanal (66; 166) und dem Filterelement (36; 136) herstellt.

5. Heizungsfilteranordnung nach einem der vorgehenden Ansprüche, **dadurch gekennzeichnet, dass** die einlassseitige Absperrung (24; 124) von einem Kugelhahn gebildet ist, dessen Kugel (42; 142) eine Durchgangsbohrung (44; 144) aufweist, durch welche die Strömung in der Betriebsstellung vom Einlass zum Filterelement leitbar ist, und die eine Ausnehmung (68; 168) aufweist, welche in der Wartungsstellung eine Verbindung zwischen Einlass und Bypasskanal (66; 166) herstellt.

6. Heizungsfilteranordnung (10) nach einem der Ansprüche 3 bis 5, **dadurch gekennzeichnet, dass** der Ablauf (30; 130) einen Kugelhahn (32; 132) oder andere Absperrung aufweist, die zum Rückspülen geöffnet wird.

7. Heizungsfilteranordnung (10) nach einem der vorgehenden Ansprüche, **dadurch gekennzeichnet, dass** das Filterelement (36; 136) von einem zylindrischen Metallsieb gebildet ist.

8. Heizungsfilteranordnung nach einem der vorgehenden Ansprüche, **dadurch gekennzeichnet, dass** das Armaturengehäuse eine Filtertasse (28; 128) umfasst, in welcher das Filterelement (36; 136) angeordnet ist und welche lösbar mit dem übrigen Armaturengehäuse verbunden ist.

9. Heizungsfilteranordnung nach Anspruch 8, **dadurch gekennzeichnet, dass** die Filtertasse (28; 128) mittels einer Schnellverbindung mit dem übrigen Armaturengehäuse verbindbar ist.

10. Heizungsfilteranordnung nach einem der vorgehenden Ansprüche, **dadurch gekennzeichnet, dass** der Einlass (16; 116) und der Auslass (18; 118) von koaxialen Stutzen gebildet sind, die an das Armaturengehäuse (112) angeformt sind, das Filterelement (36; 136) in einem nach unten ragenden Teil des Armaturengehäuses angeordnet ist und der Bypasskanal (66; 166) horizontal außen am Armaturengehäuse entlang von der einlassseitigen Absperrung zur auslassseitigen Absperrung verläuft.

11. Heizungsfilteranordnung nach einem der vorgehenden Ansprüche, **dadurch gekennzeichnet, dass** ein Magnet (149) in der Strömung zwischen Einlass und Auslass vorgesehen ist, mit welchem magnetisierbare Partikel aus der Strömung entfernbar sind.
